# EUROPEAN PATENT APPLICATION

(11) **EP 1 219 398 A2**
(43) Date of publication of application: **03.07.2002**
(21) Application number: 01830707.4
(22) Date of filing: 16.11.2001
(51) Int. Cl.: B28D 7/04, B23D 47/04

(54) **Automatic loading/unloading apparatus for stone slabs**

(30) Priority: 22.12.2000 IT TO001216
(71) Applicant: Protec Srl, 54100 Massa (IT)
(72) Inventor: Pucci, Roberto, 54100 Massa (IT)
(74) Representative: Buzzi, Franco

(57) **Abstract**

Apparatus for automatic loading/unloading of stone slabs (L), comprising a collection trolley (1) directly carrying a mobile gripping unit (15) with suction caps (16) rotating around a vertical axis (A) and pivoting on a horizontal axis (B) which is orthogonal with respect to the direction of translation (F) of the trolley (1) between a lowered horizontal position and a tipped position in which it is slanted over the vertical. The apparatus can also comprise a conveyor (20) co-operating with the collection trolley (1) with a roller bed (22) telescoping in the suction caps (16) of the gripping unit (15) and moving between a lowered horizontal position and a raised position in which it is slanted as the gripping unit (15) of the collection trolley (1).

## Description

This invention relates in general to handling systems for stone slabs, particularly marble and granite, and more specifically relates to an automatic loading and unloading device for said stone slabs.

Traditionally, such apparatuses, which have been produced and marketed by the Applicant since long time, comprise a trolley carrying a mobile gripping unit consisting of a plurality of coplanar motor driven suction caps. The trolley can either move in a direction of translation between a collection position and a release position to singularly collect and transfer the slabs arranged in a substantially vertical configuration in an upstream buffer onto a horizontal roller conveyor leading to the entrance of an operating machine, or singularly collect and transfer the slabs from a horizontal roller conveyor arranged at the machine exit to a downstream buffer destined to receive the slabs in a substantially vertical condition.

In known loading/unloading apparatuses of this kind, the gripping unit is connected to the trolley by means of a horizontal overhanging arm projecting from a pillar support. The horizontal arm can move vertically along the pillar support and can rotate on a horizontal axis to position the gripping unit between a substantially vertical condition and two reciprocally opposite horizontal positions, over and under the horizontal arm, respectively. The vertical translation and rotation movements of the horizontal arm allow the gripping unit to automatically carry out all the slab loading and unloading phases in a fashion which is synchronised with the movement of the trolley on rails which are either parallel or orthogonal to the conveyor line. Said phases consists of collecting-releasing the slabs in substantially vertical condition from a collection buffer to the release buffer, respectively; lowering-lifting the slabs in horizontal condition related to the conveyor line; tipping the slabs so to position the gripping face selectively upwards and downwards. The latter function makes either one side or the other accessible to machining, according to the type of operation which must be made on the line. For example, on lines requiring contiguous slab sawing surface machining, i.e. the so-called "open vein" machining, the slabs must be arranged on the conveyor at machine entrance alternatively tipped by 180° each time, i.e. with the gripping face alternatively facing upwards and downwards. At machine exit, the slab pack must be formed again in the release buffer in the same configuration as the collection buffer.

In addition to the lifting/lowering movements, the rotational movement from the vertical plane to the horizontal plane and tipping movement of horizontal plane of the slabs, the Applicant has also proposed to equip the known apparatus herein described with an additional movement for directing the slabs on the horizontal plane, particularly for positioning the longitudinal axis either parallelly or transversally with respect to the direction of advancement of the conveyer line. This solution is described in Italian Patent IT-B-1267992.

The known solutions described above are efficient from the operative point of view but present two drawbacks. Firstly, the size of the trolley with pillar support and projecting arm carrying the suction cap gripping unit is considerable, which can be critical in the case of implementation in machining lines with restricted available space. Secondly, the times required to complete the loading/unloading cycles of the slabs are relatively long, because the various movements of the mobile unit of the apparatus are necessarily carried out in sequence in subsequent times.

The object of this invention is to overcome these drawbacks.

According to this invention, this object is attained essentially by a gripping unit which is directly supported by the trolley rotationally on a vertical axis and pivoting on a horizontal axis which is orthogonal to said direction of translation, between a lowered horizontal position and a tipped position in which is its slanted over the vertical.

Furthermore, this gripping unit is conveniently moveable with respect to the trolley in a direction which is orthogonal to said horizontal axis.

The collection trolley of the loading/unloading apparatus according to this invention can be conveniently associated to a conveyor interposed between said trolley and the roller conveyor, and comprising a base which telescopes in said trolley and carries a roller bed, which telescopes in the suction caps of said gripping unit and is angularly mobile on a horizontal axis which is parallel to the horizontal pivoting axis of the gripping unit between a lowered horizontal position and a raised position in which it is slanted as the gripping unit when this is arranged in said tipped position to receive the slab carried by said gripping unit.

The roller bed of the conveyor is also equipped with supports for the lower edge of the slab. Said supports are conveniently mobile to centre the slab with respect to the roller bed.

Thanks to this idea, the loading/unloading apparatus according to this invention, in addition to being appreciably smaller than the conventional apparatuses described above, also reduces the loading/unloading cycle times, thanks to the possibility of overlapping and consequently making simultaneous some phases of the cycle which in conventional apparatuses are carried out in successive times.

This invention will be better explained by the following detailed descriptions with reference to the accompanying figures as non-limiting examples, whereas:
- Figure **1** is a schematic lateral elevated view showing a collection trolley which is the fundamental element of the automatic stone slab loading/unloading apparatus according to this invention;
- Figure **2** is a top plan view of figure 1;
- Figure **3** is a view similar to figure 1 showing a different configuration of the collection trolley;
- Figure **4** is a view similar to figure 1 showing a second operative configuration of the collection trolley;
- Figure **5** is a schematic lateral elevated view of a conveyor which is another fundamental component of the loading/unloading apparatus according to this invention;
- Figure **6** is a top plan view of figure 5;
- Figure **7** is a view similar to figure 5 showing a second operative configuration of the conveyor;
- Figure **8** is a scaled-down view showing the collection trolley-conveyor assembly in a home configuration;
- Figure **9** is a top plan view of the figure 8;
- Figure **10** is a view similar to figure 8 showing a telescoped operative configuration of the collection trolley and the conveyor;
- Figure **11** is a view similar to figure 10 with the collection trolley in the configuration of figure 3;
- Figure **12** is a partially cross-sectioned front elevated view of figure 10;
- Figure **13** shows another operative configuration of the loading/unloading device with the collection trolley and the conveyor arranged in the configurations respectively corresponding to figure 4 and to figure 7;
- Figure **14** shows a variant of figure 13;
- Figure **15** is a schematic top plan view showing the arrangement of a stone slab machining line with loading apparatus and unloading apparatus according to this invention;
- Figure **16** is a variant of figure 15;
- Figure **17** is a similar view to figure 15 showing a simplified configuration of the machining line, and
- Figure **18** is a variant of figure 17.

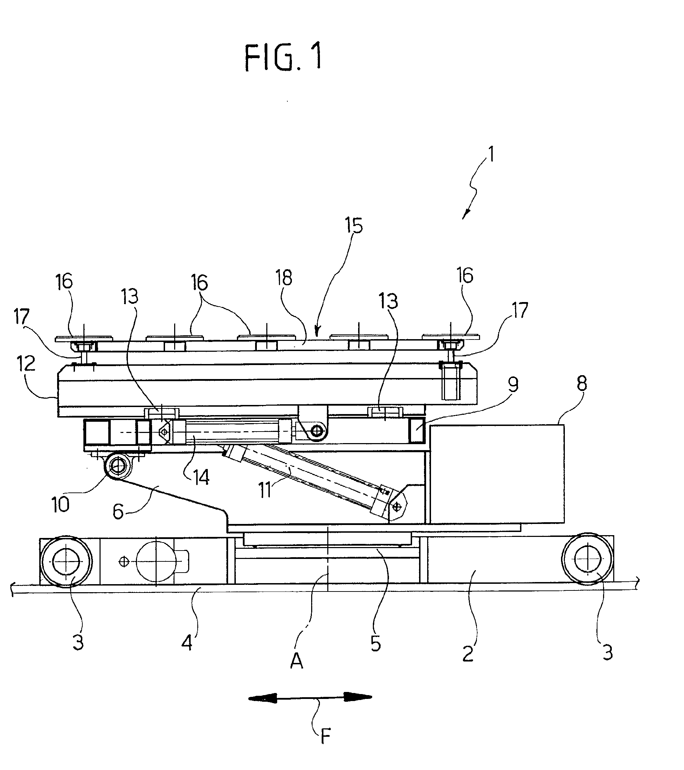

Initially referring to figure 1, numeral 1 generally indicates a collection trolley which can be used, according to the method described below, for loading or unloading stone slabs (for example, marble or granite), at the beginning and the end of the machining line, respectively, which also will be described below.

The trolley 1 presents a robust base structure 2 with four wheels 3 turning on straight rails 4 which define an alternative translation direction of the trolley 1, indicated by the arrow F.

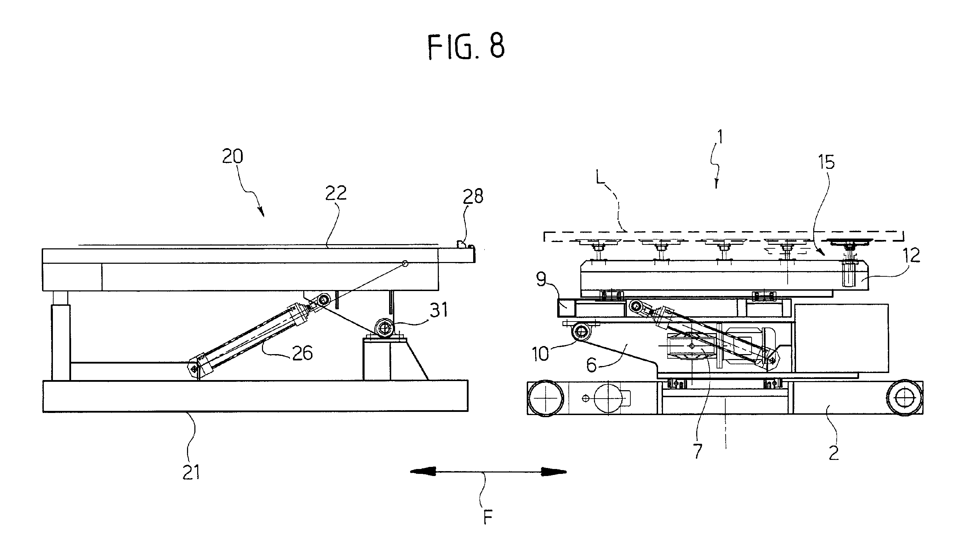

A platform 6 carries one end of a hydraulic power unit 8. The platform 6 rotates on the central part of the base structure 2 by means of a fifth wheel 5 with a vertical axis A. The rotation of the rotating platform 2 on the fifth wheel 5 is controlled by a geared motor unit indicated schematically with numeral 7 in figures 8, 10, 11, and 12.

Numeral 9 indicates a tipping frame with one side rotationally connected to one end of the rotating platform 6 opposite the power unit 8, on a hinge 10 which horizontal axis is orthogonal to the direction of translation F. The axis of the hinge 10 is indicated by letter B in the figures.

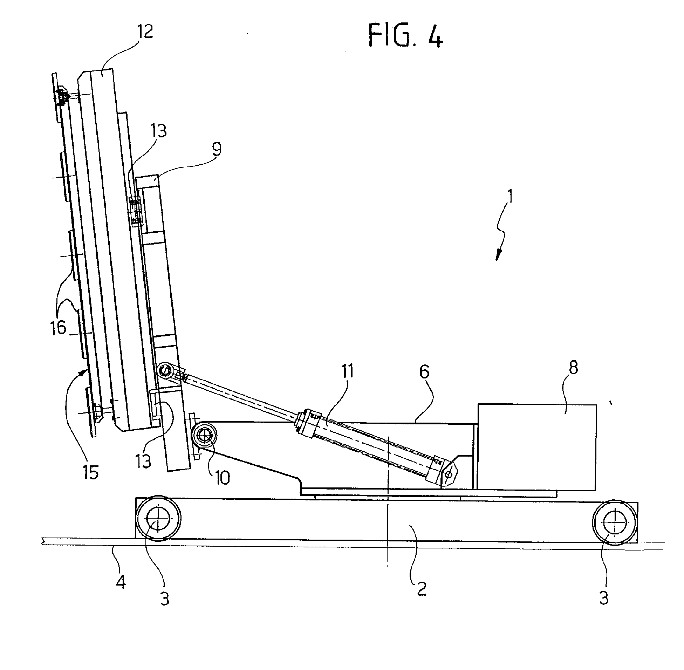

The tipping platform 9 can pivot from a lowered horizontal position shown in figures from 1 to 3, and in figures from 8 to 12, to a tipped position shown in figures 4, 13 and 14, in which it is slanted to an angle over the vertical. One or more conveniently two hydraulic linear actuators 11, articulated on one side of the rotating platform 2 and on the other under the tipping frame 9, are provided to control the pivoting movement of the tipping frame 9.

A translating frame 12 sliding with respect to the tipping frame 9, on shoes 13, in a direction which is orthogonal with respect to the pivoting axis B, is arranged over the tipping frame 9. This direction is variable according to the possibility of rotation of the translating frame 12 on the vertical axis A, as well as its possibility of pivoting on the axis B. In the condition shown in figures from 1 to 3, the direction of translation of the translating frame 12 coincides with the direction of translation F.

One or more conveniently two hydraulic linear actuators 14, arranged on opposite sides of the tipping frame 9, are provided to move the translating frame 12.

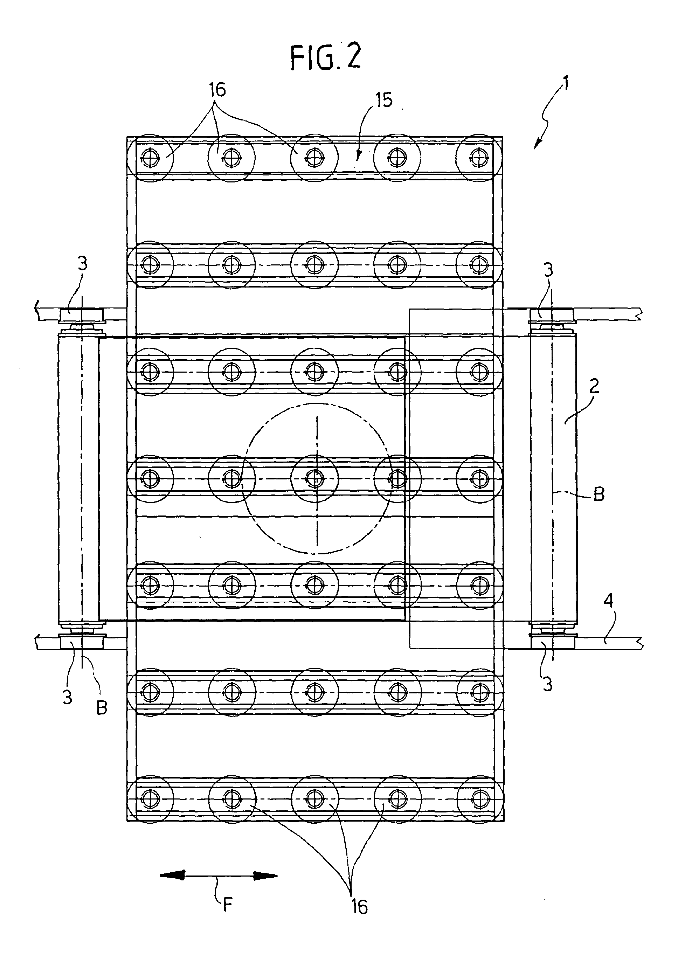

A vacuum gripping system is applied to the translating frame 12, preferably - but not necessarily - comprising a set of mobile suction caps 16 connected to a vacuum generator unit and connected to respective hydraulic linear actuators 17. The suction caps 16 are coplanar and the hydraulic actuator units 17-suction caps 16 are suitably dimensioned and spaced out on a common frame 18 to better distribute the gripping action on the slabs. This distribution is shown in figure 2.

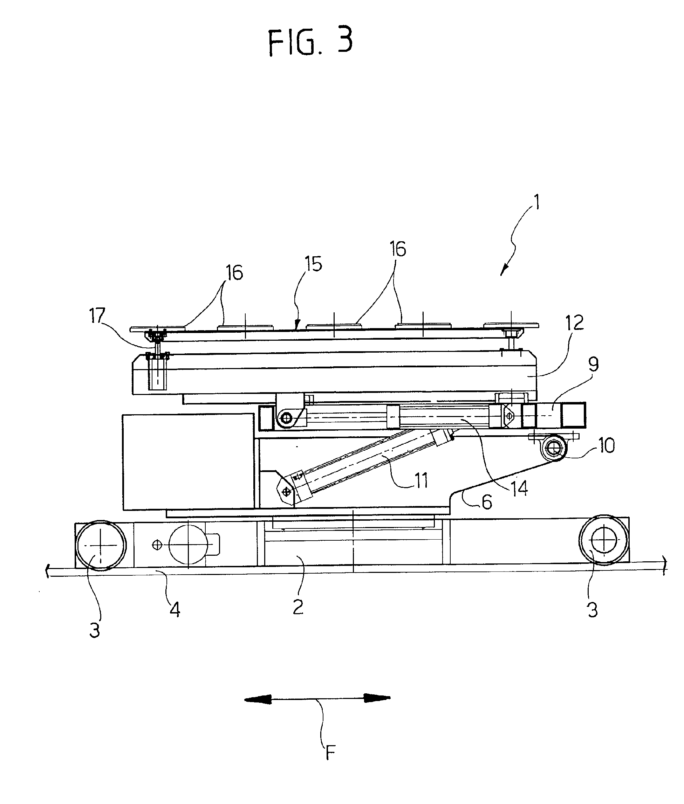

Figures 3 and 4 show two possible operative conditions of the trolley 1, which are different from the configuration shown in figure 1. In the case of figure 3, the rotating platform 6 is turned by 180° on the axis A and the translating frame 12 is advanced with respect to the tipping frame 9. In the case of figure 4, the tipping frame 9 is arranged, along with the translating frame 12 and the gripping unit 15, in the tipped position over the vertical.

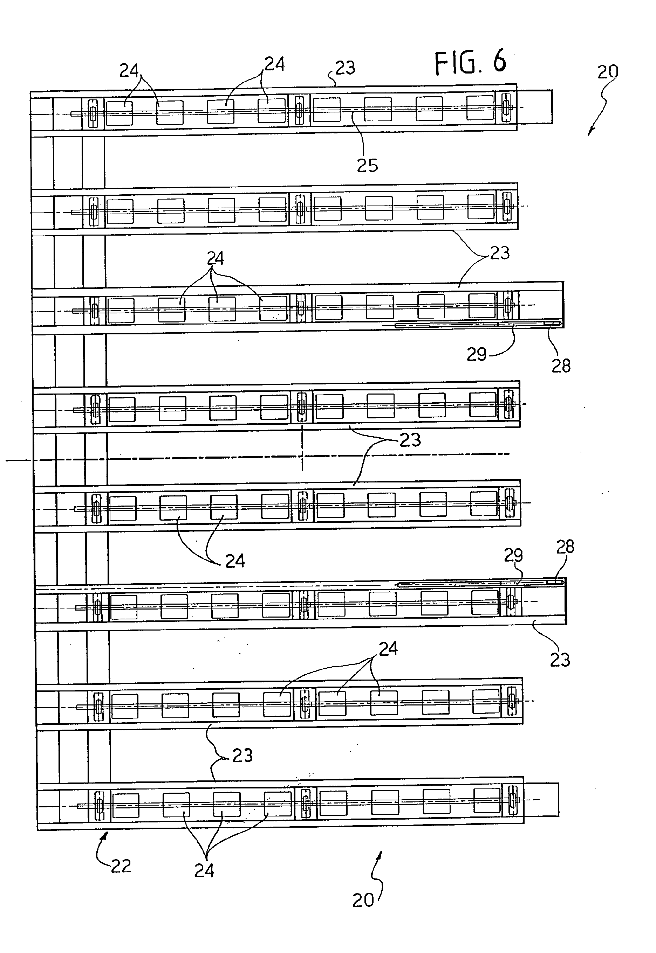

With reference to figures from 5 to 7, numeral 20 indicates a conveyor which can be used, according to methods described below, in co-ordinated operative combination with the collection trolley 1 described above. The transferred apparatus 20 essentially comprises a robust fixed base 21 carrying a roller bed 22 articulated on the base 21 by means of a horizontal axis hinge 31. As shown better in figure 6, the roller bed 22 presents a generic comb configuration, with a set of arms 23 carrying idle rollers 24 turning on respective axes 25 which are perpendicular to the axis of the hinge 31.

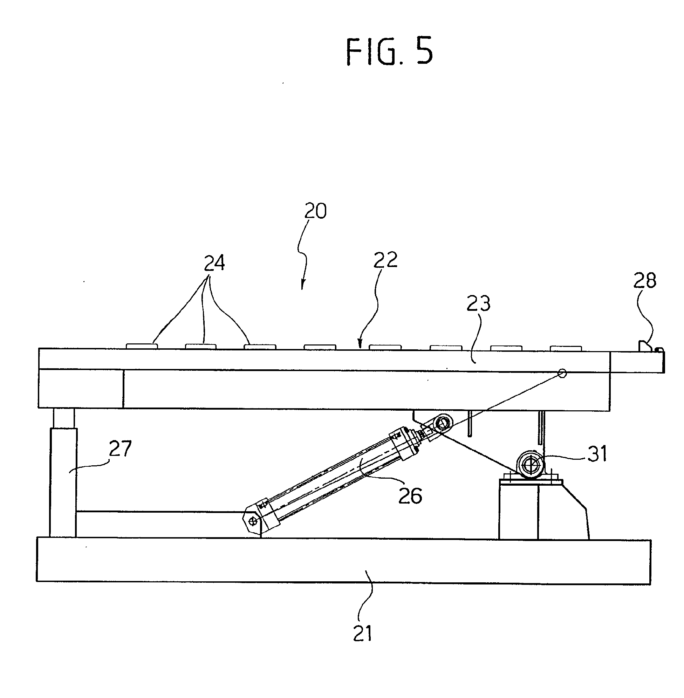

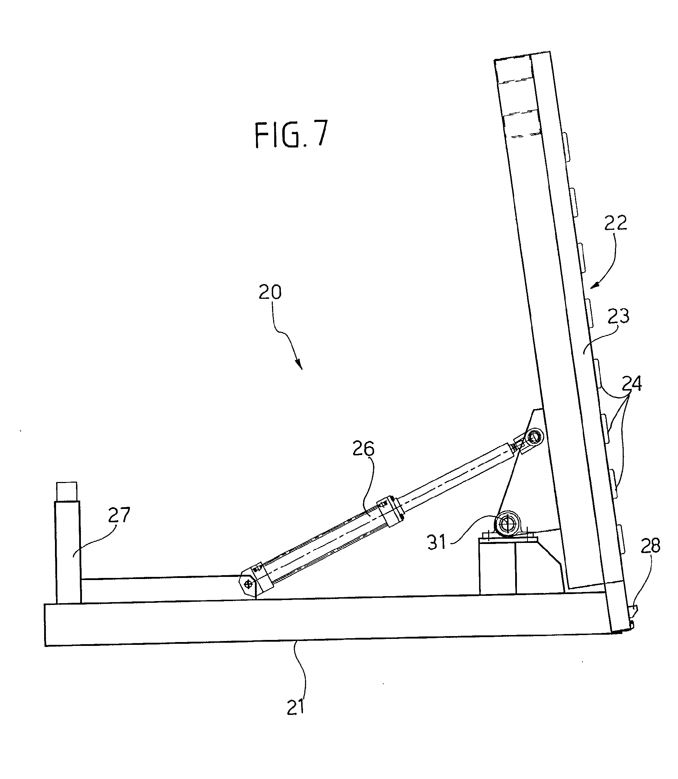

By means of one or more conveniently a pair of hydraulic linear actuators 26, the roller bed 22 can be pivoted from a lowered horizontal position, shown in figures 5 and 6, in which it rests on the pillars 27 of the base 21, to a tipped position, shown in figure 7, in which it is slanted as the gripping unit 15 of the trolley 1 in the tipped condition previously described with reference to figure 4.

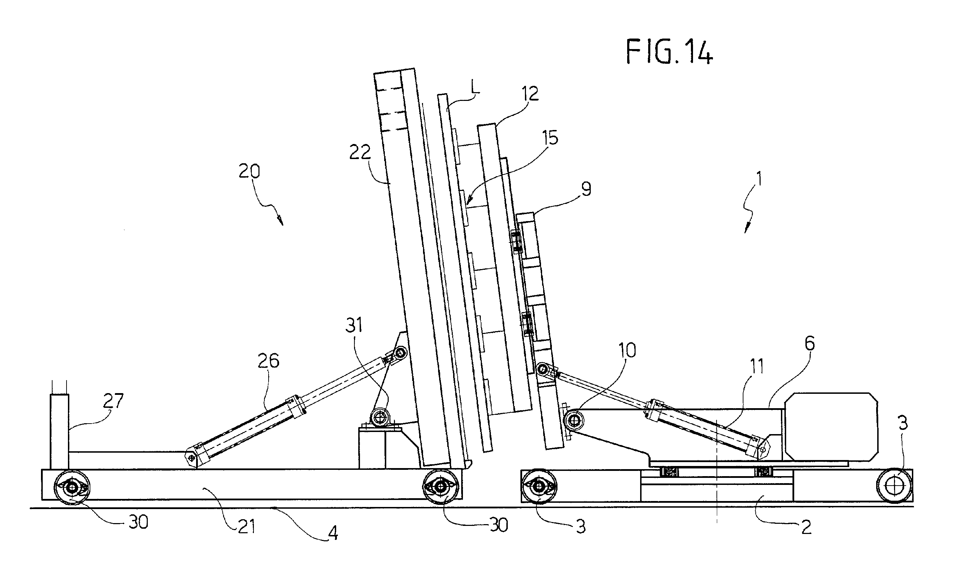

Supports 28 are arranged on the front side of the roller bed 22, two in the example shown, which support the slab when this is arranged on the roller bed 22 during the passage from the trolley 1 to the conveyor 20, as described below. The supports 28 are conveniently mobile on longitudinal guides 29 formed in the respective arms (figure 6) and can move by means of respective hydraulic or mechanical actuators (not shown) to centre the slab with respect to the machining middle line, as described below. It is important to note that the function of centring the middle line of the slab with the machining middle line can also be obtained without equipping the supports 28 with a driven movement if the conveyor 20 is moveable in the direction of translation F, as shown in the variant illustrated in figure 14, in which the base 21 is equipped with wheels 30 moving along the rails 4.

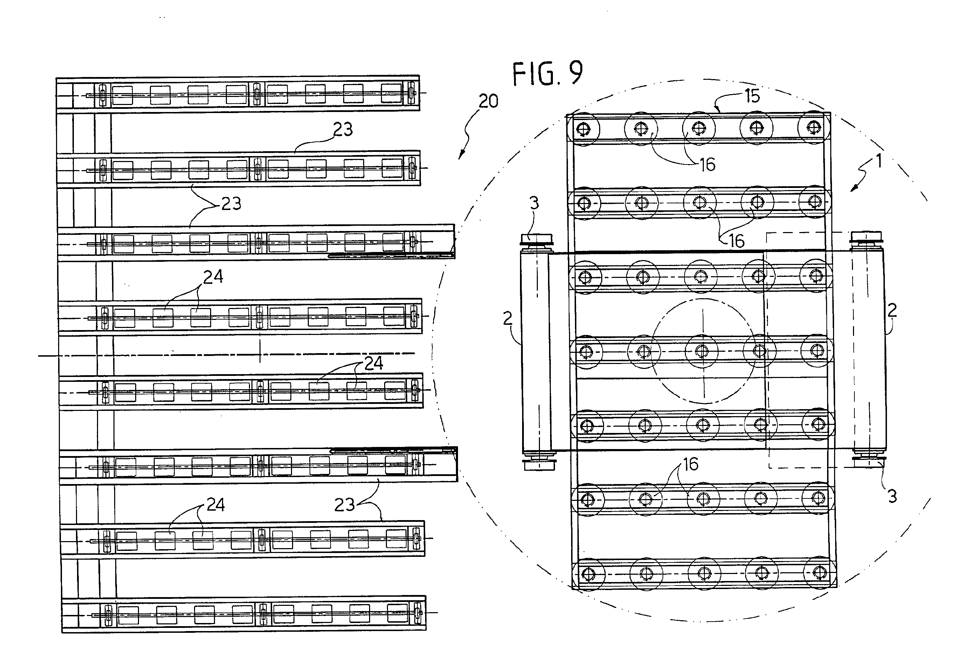

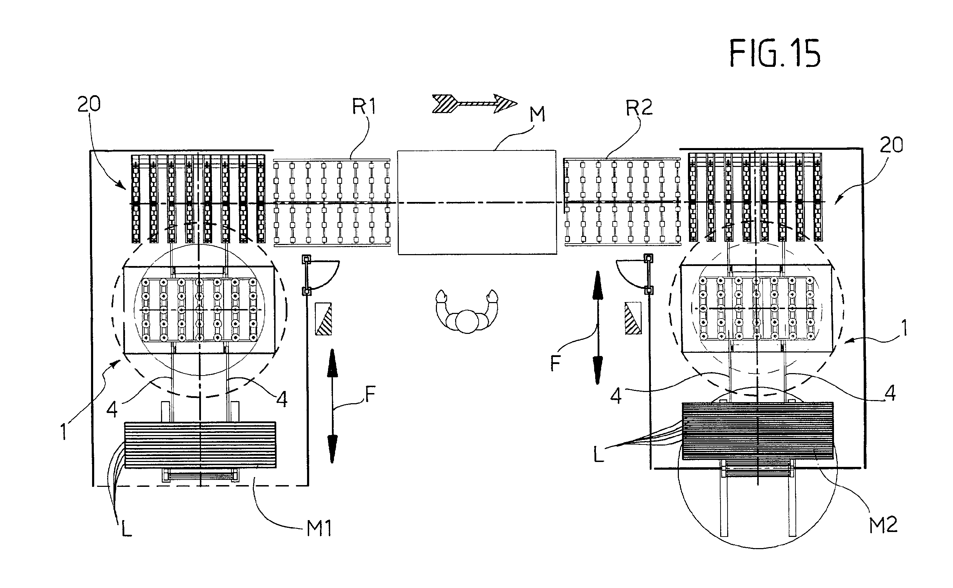

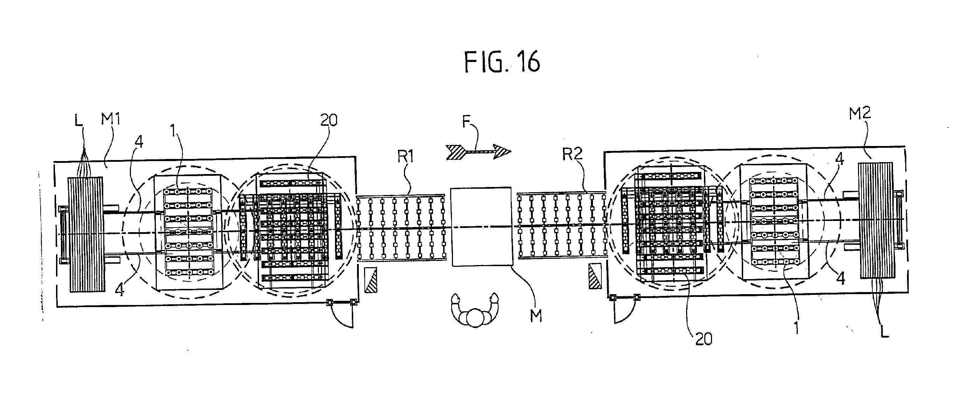

Figure 8 shows the relative arrangement of the collection trolley 1 and the conveyor 20, in a phase which is immediately prior to conveying the slab of marble or granite L. Before describing the conveying operation in detail, reference should be made either to figure 15 or to figure 16 which show two alternative arrangements of a machining line using the loading/unloading apparatus according to this invention. The machining line comprises essentially an operating machine M with a loading roller bed R1 associated to its entrance and an unloading roller bed R2 associated to its exit. A loading apparatus and an unloading apparatus according to this invention are arranged upstream and downstream with respect to the loading roller bed 1 and to the unloading roller bed 2, respectively. Both apparatuses consists of a collection trolley 1 and a conveyor 20 as described above, with the rails 4 defining the direction of translation F of two pairs directed orthogonally with respect to the roller beds R1, R2. For each pair, the arrangement of the collection trolley 1 and the conveyor 20 is shown in figures 8 and 9. As concerns loading, the collection trolley 1 is arranged to collect the slabs L from an upstream buffer M1 where the slabs L to be sent to the operating machine M are arranged in packs in a slightly slanted position with respect to the vertical and with the longer sides arranged horizontally. A downstream buffer M2 is arranged at the end of the line where the machined slabs are positioned in the initial arrangement. In the case illustrated in figure 16, the machining line differs from that shown in figure 15 simply in that the loading and the unloading operations are frontal, instead of lateral, i.e. the direction of translation F defined by the rails 4 is parallel to the entrance and exit roller beds R1, R2. Also in this case, the relative position of the collection trolley 1 and the conveyor 20 of each pair corresponds, in home position, to that shown in figures 8 and 9. It must be stressed that in this case the conveyors 20 must turn by 90° with respect to the vertical to be positioned in the conditions shown in figure 16.

The operation of the loading/unloading apparatus according to this invention will be described with reference to the handling of a slab L along the machining line.

The supply cycle of the slab L to the operating machine M initially consists in positioning the collection trolley 1 next to the upstream buffer M1, directed as shown in figure 3. By tipping the tipping frame 9, which can be combined with the translation of the translating frame 12, the gripping unit 15 is positioned in contact with the outermost slab L in the pack arranged in the buffer M1. The collection operation of the slab L is then carried out by activating the pressure generator unit associated to the suction caps 16.

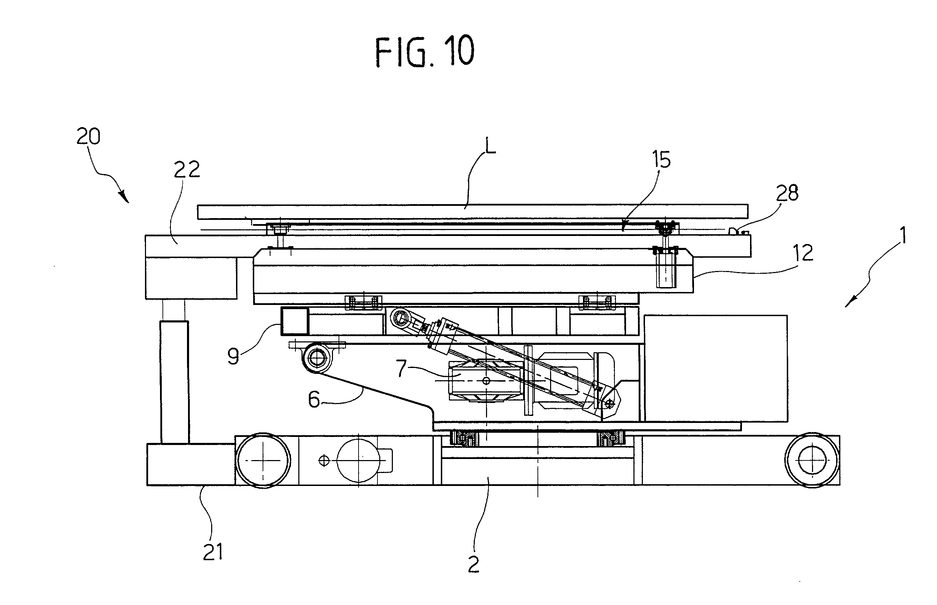

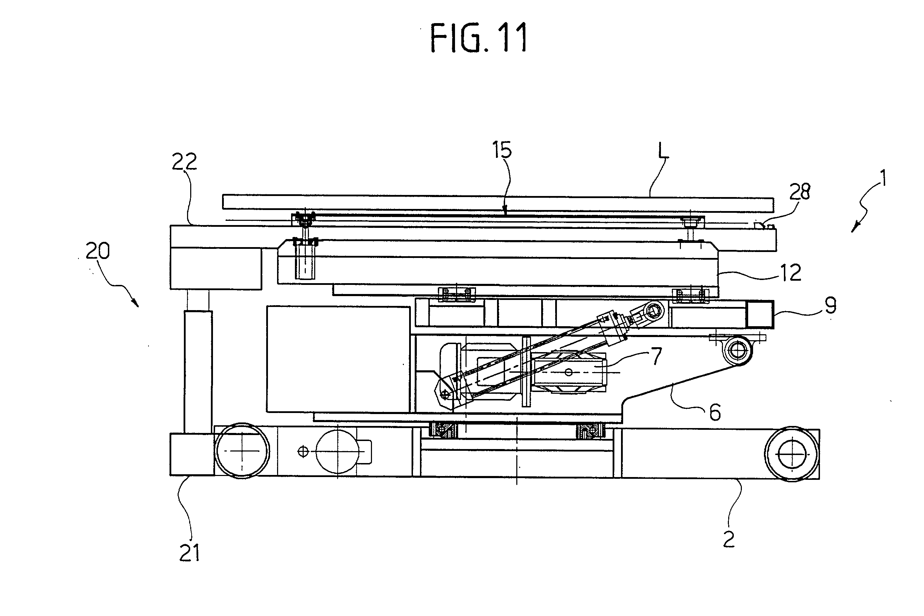

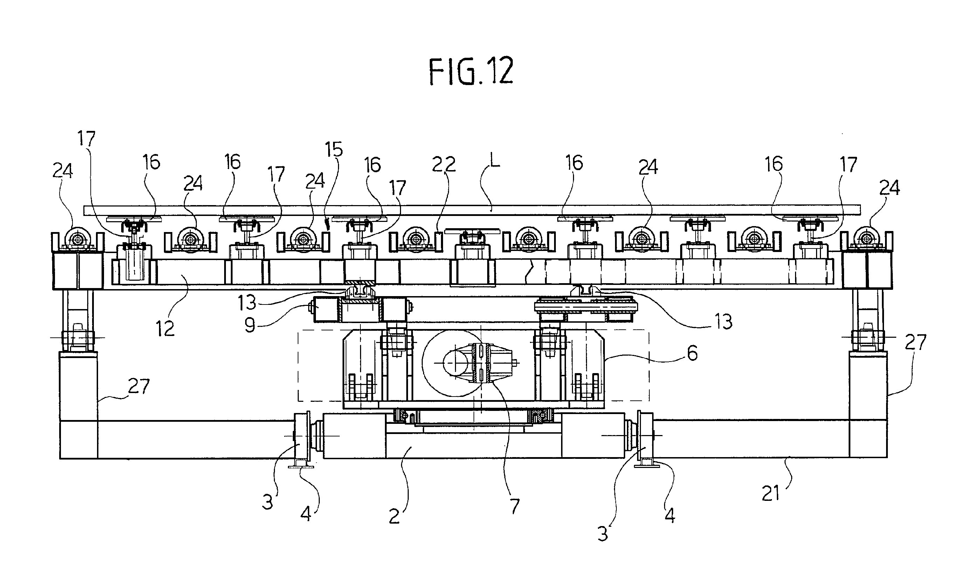

The collection trolley 1 then moves to the condition in figure 3, arranging the slab L horizontally, and then to that shown in either figure 1 or figure 8. From this position, the slab L can be transferred to the conveyor 20 either in the same position, or in a position turned by 180° on the plane, or tipped by 180°. In the first and in the second case, after directing the slab L with respect to the vertical axis, the collection trolley 1 is advanced in the direction of translation F towards the conveyor 20, telescoping with the latter as shown either in figure 10 or in figure 11, and in figure 12. The telescoping movement is possible on one hand because the suction caps 16 are offset with respect to the arms 23 carrying the rollers 24 in the way shown in figure 9 and on the other by effect of lifting the slab L by the actuators 17 associated to the suction caps 16.

The slab L is thus deposited on the rollers 24 by effect of the lowering movement of the suction caps 16 and consequently transferred to the entrance roller bed M1, while the collection trolley 1 takes another slab. The same operations, obviously reversed, as carried out to unload the slab L from the exit roller bed M2 and to arrange it in the downstream buffer M2.

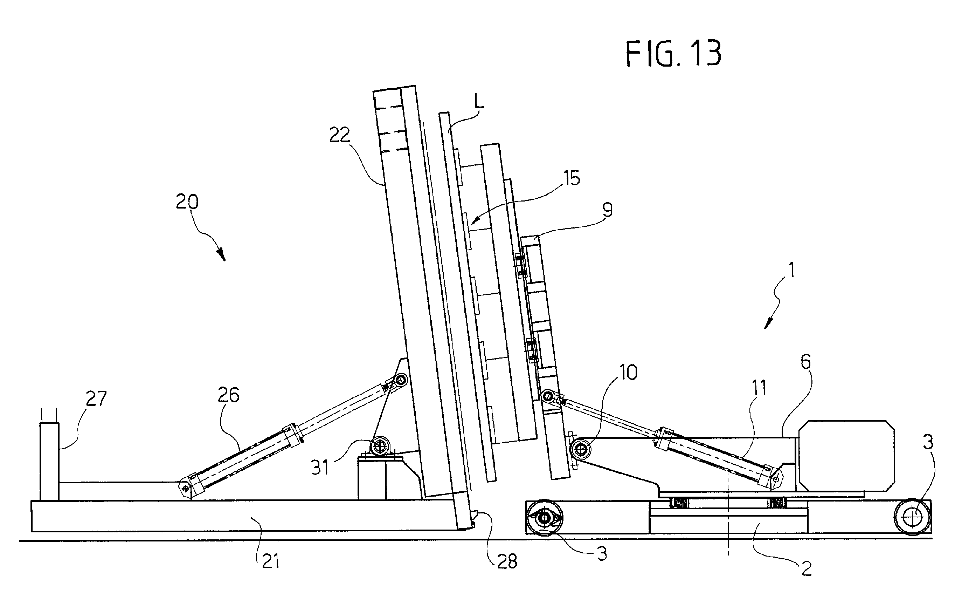

In the second case, i.e. in the case of "open vein" machining, the slabs L must be alternatively tipped by 180°. The tipping is carried out during the loading phase and during the unloading phase, as shown in figure 13 and figure 14. The tipping frame 9 of the collection trolley 1 is turned on the axis of the hinge 10 over the vertical and at the same time the roller table 22 of the conveyor 20 is arranged in raised position parallelly and frontally with respect to the gripping unit 14. The slab L is thus rested on the roller bed 22 by effect of the advancement of the collection trolley 1 towards the conveyor 20, and released so that its lower side is supported by the supports 28. The movement of these supports 28, or alternatively the translation movement of the conveyor 20 according to the variant in figure 14, arranges the slab L in centred position with respect to the axis of the plane. This axis corresponds to the machining middle line after that the plane has returned to the horizontal position by effect of the rotation of the roller platform 22 in the starting position.

The possible movement of the supports 28 both for the initial supporting action of the slab L transferred from the trolley 1 and for the subsequent centring of the slab L, can be controlled by means of suitable sensors (neither illustrated nor described herein, being within the grasp of sector experts).

The slab L is thus transferred to the entrance roller bed R1. The unloading operations from the roller bed R2 are carried out by reversing the operations described above.

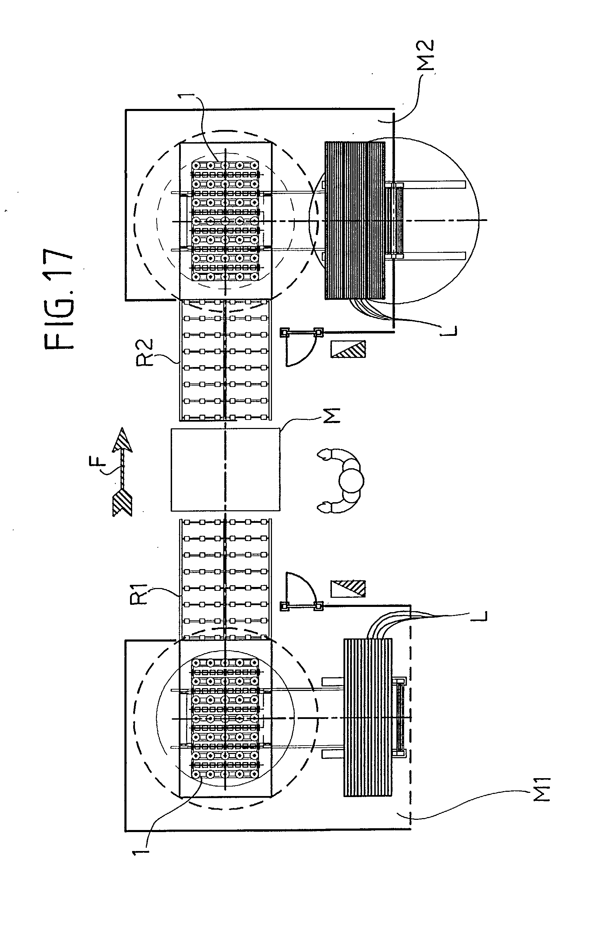

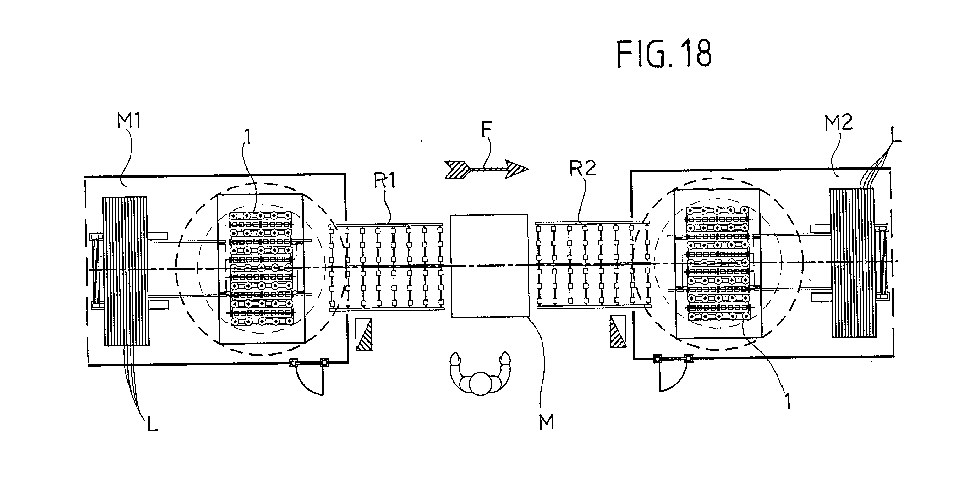

It is important to note that the presence of the conveyor 20 in the loading/unloading apparatus according to this invention is not strictly necessary. The conveyor can be eliminated in lines where "open vein" machining is not required. This arrangement is shown in figures 17 and 18 (in which the parts which are either identical or similar to those of figures 15 and 16 are referred to with the same numerals), with reference to a lateral and frontal loading and unloading arrangement, respectively.

Naturally, numerous changes can be implemented to the construction and forms of embodiment of the invention herein envisaged, all comprised within the context of the concept characterising this invention, as defined by the following claims.

## Claims

1. Apparatus for automatic loading/unloading of stone slabs (L), comprising a collection trolley (1) carrying a mobile gripping unit (15) consisting of a plurality of coplanar motor driven suction caps (16, 17), said trolley being moveable either in a direction of translation (F) between a collection position and a release position to singularly collect and transfer the slabs (L) arranged in a substantially vertical configuration in an upstream buffer (M1) onto a horizontal roller conveyor (R1) leading to the entrance of an operating machine (M), or singularly collect and transfer said slabs (L) from a horizontal roller conveyor (R2) arranged at the exit of the operating machine (M) to a downstream buffer (M2) destined to receive the slabs (L) in a substantially vertical condition, **characterised in that** said gripping unit (15) is directly supported by said trolley (1) rotationally on a vertical axis (A) and pivotally on a horizontal axis (B) which is orthogonal with respect to said direction of translation (F) between a lowered horizontal position and a tipped position in which it is slanted over the vertical.

2. Loading/unloading apparatus according to claim 1, **characterised in that** said gripping unit (15) is also moveable with respect to said trolley (1) in a direction with is orthogonal with respect to said horizontal axis (B).

3. Loading/unloading apparatus according to claim 2, **characterised in that** said trolley (1) carries a fifth wheel (5) to which a rotating platform (6), carrying a frame (9) pivoting on said horizontal axis (B), is rotationally coupled on said vertical axis (A), said pivoting frame (9) carries a frame (12) translating in said direction which is orthogonal to said horizontal axis (B) and in turn carrying said gripping unit (15), driven actuators (7, 11, 14) providing to control the rotation of the rotating platform (6) and tipping of the pivoting platform (9) and the translation of the translating frame (12), respectively.

4. Loading/unloading apparatus according to any of the claims from 1 to 3, **characterised in that** it also comprises a conveyor (20) operatively associated to said collection trolley (1) and interposed between the trolley and said roller conveyor (R1; R2), said conveyor (20) comprising a base (21) telescoping with said trolley (1) and carrying a roller bed (22) telescoping with the suction caps (16) of said gripping unit (15) on said trolley (1) and angularly moveable on a horizontal axis (31) which is parallel to the horizontal pivoting axis (B) of said gripping unit (15) between a horizontal lowered position and a raised position in which it is slanted as the gripping unit (15) of the trolley (1) when this is arranged in said tipped position, to receive the slab (L) carried by said gripping unit (15).

5. Loading/unloading apparatus according to claim 4, **characterised in that** said roller bed (22) of the conveyor (20) is equipped with supports (28) for the lower edge of the slab (L).

6. Loading/unloading apparatus according to claim 5, **characterised in that** said supports (28) are moveable to centre the slab (L) relatively to the roller bed (22).

7. Loading/unloading apparatus according to any of the claims above, **characterised in that** said conveyor (20) is moveable in said direction of translation (F) .

8. Loading/unloading apparatus essentially as described and illustrated for the specified purposes.

9. Stone slab (L) machining line, **characterised in that** it includes at least one loading/unloading apparatus according to one or more of the claims above.
